# EUROPEAN PATENT APPLICATION

(11) **EP 1 952 966 A1**
(43) Date of publication of application: **06.08.2008**
(21) Application number: 06823472.3
(22) Date of filing: 20.11.2006
(51) Int. Cl.: B29C 45/50, B29C 45/76

(54) **INJECTION MACHINE AND METHOD OF REGULATING INJECTION MACHINE**

(30) Priority: 21.11.2005 JP 2005336251
(71) Applicant: SUMITOMO HEAVY INDUSTRIES, LTD., Shinagawa-ku, Tokyo 141-8686 (JP)
(72) Inventor: YOSHIDA, Naohiro, Chiba-shi, Chiba 263-0001 (JP); MORITA, Hiroshi, Yokosuka-shi, Kanagawa 237-8555 (JP); HAYAKAWA, Masahiro, Chiba-shi, Chiba 263-0001 (JP); SATOU, Hiroshi, Chiba-shi, Chiba 263-0001 (JP)
(74) Representative: Geyer, Ulrich F.
(86) International application number: PCT/JP2006/323085
(87) International publication number: WO 2007/058342

(57) **Abstract**

An injection apparatus having a mechanism wherein an object is advanced and retracted by a plurality of shafts 23, 24, the injection apparatus includes: a plurality of axial force detection parts 27, 28 configured to detect an axial force of each of the shafts 23, 24; and a control part 40 configured to compare detection values detected by the axial force detection parts 27, 28, the control part 40 being configured to calculate an amount of operation of a position of a shaft to be operated in the plurality of the shafts 23, 24 based on a difference of the axial forces of the shafts 23, 24 indicated by the detection values so as to correct the position, the control part 40 being configured to cancel the difference of the axial forces.

## Description

### TECHNICAL FIELD

The present invention generally relates to injection apparatuses and adjusting methods of the injection apparatuses. More particularly, the present invention relates to an injection apparatus having a mechanism wherein an object is advanced and retracted by plural shafts and a method for adjusting difference of axial forces of plural shafts provided in the injection apparatus.

### BACKGROUND ART

Conventionally, an injection apparatus having a mechanism wherein an object is advanced and retracted by plural shafts has been known. Such a mechanism is superior to a mechanism wherein an object is advanced and retracted by a single shaft in terms of load inertia (GD²) and cost.

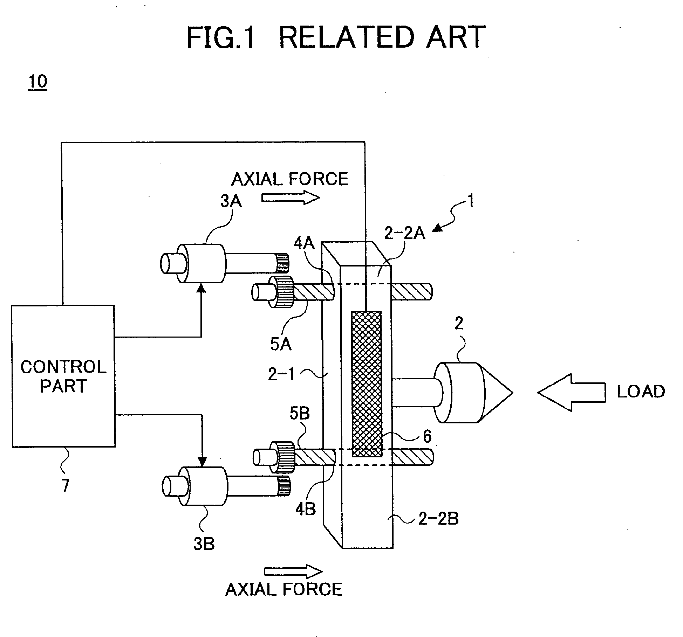

FIG. 1 is a schematic structural view of an injection screw advancing and retracting driving system of a related art motor-driven injection molding machine having such a mechanism. See Patent Document 1 mentioned below.

Referring to FIG. 1, a motor-driven injection apparatus 10 has an injection screw 2 and a motor-driven actuator 1 having plural electric motors 3A and 3B whereby the injection screw 2 is advanced and retracted.

The injection screw 2 is provided in an injection cylinder so as to be capable of advancing and retracting and injects a resin material in the injection cylinder into a mold.

The motor-driven injection apparatus 10 also has a control part 7 and a strain detection part 6. The control part 7 controls a position and/or speed of the motor-driven actuator 1 so that the injection screw 2 can move to an object position at an object speed. The strain detection part 6 is provided between plural driven parts where driving forces (axial forces) from the electric motors 3A and 3B by the injection screw 2 are added, or in the vicinity of each of the driven parts. Here, the driven part is a base part 2-1 of the screw 2 or are extending parts 2-2A and 2-2B extending to left and right of a base part 2-1. The strain detection part detects strain generated due to a load corresponding to the above-mentioned axial force.

Ball screw nuts 4A and 4B are provided at the extending parts 2-2A and 2-2B. A pair of ball screw shafts 5A and 5B are screw-fixed with the ball screw nuts 4A and 4B, respectively. When the electric motor 3A and 3B are driven, by the ball screw nuts 4A and 4B and the ball screw shafts 5A and 5B, rotational forces of the electric motors 3A and 3B are converted to translational forces so that the injection screw 2 is advanced or retracted.

The control part 7 controls the electric motors 3A and 3B so that the strain is cancelled based on strain information detected by the strain detection part 6. [Patent Document 1] Japanese Patent No. 3556897

### DISCLOSURE OF THE INVENTION

### PROBLEMS TO BE SOLVED BY THE INVENTION

However, even if the strain at the driven part of the injection screw 2 can be resolved, an unbalanced load may be generated at each of the ball screw shafts 5A and 5B due to a component clearance (tolerance) of the motor-driven injection apparatus 10 or an assembly error in assembling the motor-driven injection apparatus 10.

In this case, in a structure shown in FIG. 1, since the strain detection part 6 is provided at the base part 2-1 of the injection screw 2 or between or in the vicinity of the extending parts 2-2A and 2-2B extending to left and right of a base part 2-1, the difference of strain between the ball screw shafts 5A and 5B, that is, difference of load generated between the ball screw shafts 5A and 5B, cannot be detected. Therefore, it is difficult to control the electric motor 3A or 3B to make such a difference be canceled.

Under this situation, if the electric motor 3A and 3B are driven so that rotational forces of the electric motors 3A and 3B are converted to translational forces via the ball screw nuts 4A and 4B and the ball screw shafts 5A and 5B in order to make the injection screw 2 advance or retract, an eccentric load may be concentrated on the ball screw nut 4A or 4B so that a stress may be locally generated. As a result of this, a service life of the ball screw nut 4A or 4B or the ball screw shaft 5A or 5B or a mechanical service life of the motor-driven injection apparatus 10 may be degraded.

In addition, even if a mechanical adjusting mechanism is provided in the motor-driven injection apparatus 10 in order to prevent this, a lot of time may be required for adjustment and adjustment operations may be complicated.

### MEANS FOR SOLVING PROBLEMS

Accordingly, embodiments of the present invention may provide a novel and useful injection apparatus and adjusting method of the injection apparatus solving one or more of the problems discussed above.

More specifically, the embodiments of the present invention may provide an injection apparatus having a mechanism wherein an object is advanced and retracted by plural shafts, and an adjusting method of the injection apparatus so that the axial shaft of each of the shafts can be detected with high precision under a simple structure and it is possible to adjust the difference of the axial forces of the shafts if the difference occurs and keep the balance of loads applied to the shafts.

One aspect of the present invention may be to provide an injection apparatus having a mechanism wherein an object is advanced and retracted by a plurality of shafts, the injection apparatus including: a plurality of axial force detection parts configured to detect an axial force of each of the shafts; and a control part configured to compare detection values detected by the axial force detection parts, the control part being configured to calculate an amount of operation of a position of a shaft to be operated in the plurality of the shafts based on a difference of the axial forces of the shafts indicated by the detection values so as to correct the position, the control part being configured to cancel the difference of the axial forces.

The embodiments of the present invention may also provide an adjusting method of an injection apparatus, including the steps of: detecting an axial force of each of a plurality of shafts provided in the injection apparatus; and adjusting a difference of the axial forces by correcting a position of the shaft to be operated, in a case where the difference of the detected axial forces exceeds a designated standard value.

### EFFECT OF THE INVENTION

According to the embodiment of the present invention, it is possible to provided an injection apparatus having a mechanism wherein an object is advanced and retracted by plural shafts, and an adjusting method of the injection apparatus so that the axial shaft of each of the shafts can be detected with high precision under a simple structure and it is possible to adjust the difference of the axial forces of the shafts if the difference occurs and keep the balance of loads applied to the shafts. Other objects, features, and advantages of the present invention will become more apparent from the following detailed description when read in conjunction with the accompanying drawings.

### BRIEF DESCRIPTION OF DRAWINGS

FIG. 1 is a schematic structural view of an injection screw advancing and retracting driving system of a related art motor-driven injection molding machine;
FIG. 2 is a schematic structural view showing a basic concept of the present invention;
FIG. 3 is a flowchart showing a first example of a method for adjusting balance of axial forces of a master motor side ball screw shaft and a slave motor side ball screw shaft;
FIG. 4 is a flowchart showing a second example of the method for adjusting the balance of the axial forces of the master motor side ball screw shaft and the slave motor side ball screw shaft;
FIG. 5 is a graph showing results of the adjustment by a method of balance adjustment of the axial forces of the master motor side ball screw shaft and the slave motor side ball screw shaft shown in FIG. 3 or FIG. 4;
FIG. 6 is a cross-sectional view of an injection apparatus of a first example of the present invention;
FIG. 7 is a cross-sectional view of an injection driving part of the injection apparatus shown in FIG. 6;
FIG. 8 is a cross-sectional view of an injection apparatus of a second example of the present invention;
FIG. 9 is a cross-sectional view of an injection driving part of an injection apparatus of a third example of the present invention; and
FIG. 10 is a cross-sectional view of an injection apparatus of a fourth example of the present invention.

### EXPLANATION OF REFERENCE SIGNS

20, 410, 510 Injection apparatus
21, 22, 150, 233 Injection driving part
23, 24, 122M, 122S, 232M, 232S Ball screw shaft
25, 26, 121M, 121S, 231M, 231S Ball screw nut
27, 28, 174M, 174S, 234M, 234S, 374M, 374S Load Cell
40, 400, 500 Control part
111 Injection linear support
175 Fixing member
217 Rear flange member

### BEST MODE FOR CARRYING OUT THE INVENTION

A description will be given briefly below, with reference to FIG. 1, of a mold-clamping apparatus of an injection molding machine as an apparatus to which a strain detection apparatus according to the present invention is applicable.

### [Basic concept of the present invention and method for adjusting balance of axial force]

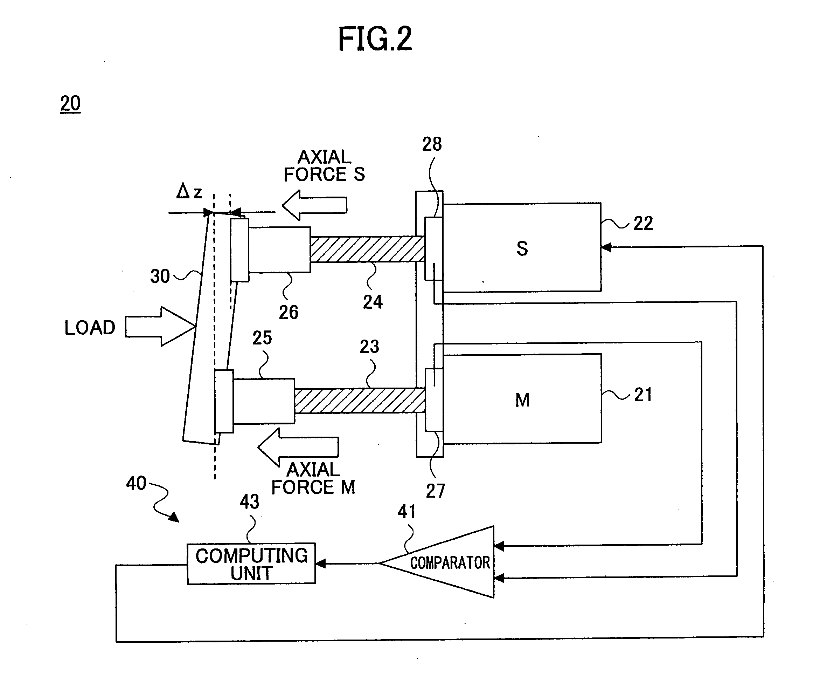

First, a basic concept of the present invention is discussed with reference to FIG. 2. Here, FIG. 2 is a schematic structural view showing the basic concept of the present invention.

As shown in FIG. 2, the present invention can be applied to a driving system of an injection apparatus wherein an object is advanced and retracted by plural shafts.

More specifically, a driving system 20 of the injection apparatus includes a master motor 21, a slave motor 22, a load plate 30, a master motor side ball screw shaft 23, a slave motor side ball screw shaft 24, a master motor side ball screw nut 25, and a slave motor side ball screw nut 26. The master motor 21 and the slave motor 22 function as driving parts. The load plate 30 functions as a load object and is movably provided. The master motor side ball screw shaft 23 transmits rotation of the master motor 21 and the slave motor side ball screw shaft 24 transmits rotation of the slave motor 22. The master motor side ball screw nut 25 is engaged with the master motor side ball screw shaft 23. The slave motor side ball screw nut 26 is engaged with the slave motor side ball screw shaft 24.

Under this structure, when the master motor side ball screw shaft 23 and the slave motor side ball screw shaft 24 are rotated by the master motor 21 and the slave motor 22, rotational movement transmitted to the master motor side ball screw shaft 23 and the slave motor side ball screw shaft 24 is converted to a linear movement by the master motor side ball screw shaft 23, the slave motor side ball screw shaft 24, the master motor side ball screw nut 25, and the slave motor side ball screw nut 26. As a result of this, the load plate is advanced or retracted.

In the meantime, a master side axial force detector 27 and a slave side axial force detector 28 as axial force detectors are provided at the master motor side ball screw shaft 23 and the slave motor side ball screw shaft 24, respectively. Therefore, loads applied to the master motor side ball screw shaft 23 and the slave motor side ball screw shaft 24, namely an axial force M and an axial force S are detected.

Detected axial force M of the master motor side ball screw shaft 23 and detected axial force S of the slave motor side ball screw shaft 24 are compared by an axial force comparator 41 provided at a control part 40 so that difference between the axial forces M and S, namely "axial force M - axial force S" or "axial force S - axial force M" is recognized. Based on such difference, Δz that is an operation amount of a position of the slave motor side ball screw shaft 24 is determined by an axial position operations amount computing unit 43, the position is corrected automatically or manually, and thereby the difference of the loads applied to the master motor side ball screw shaft 23 and the slave motor side ball screw shaft 24 is canceled so that difference of the axial forces at the both shafts is canceled.

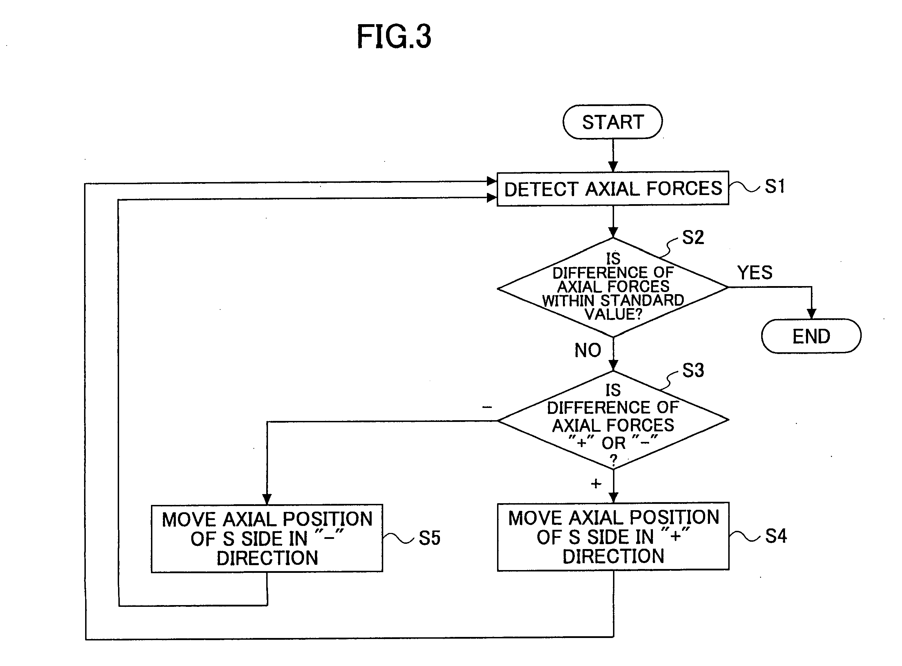

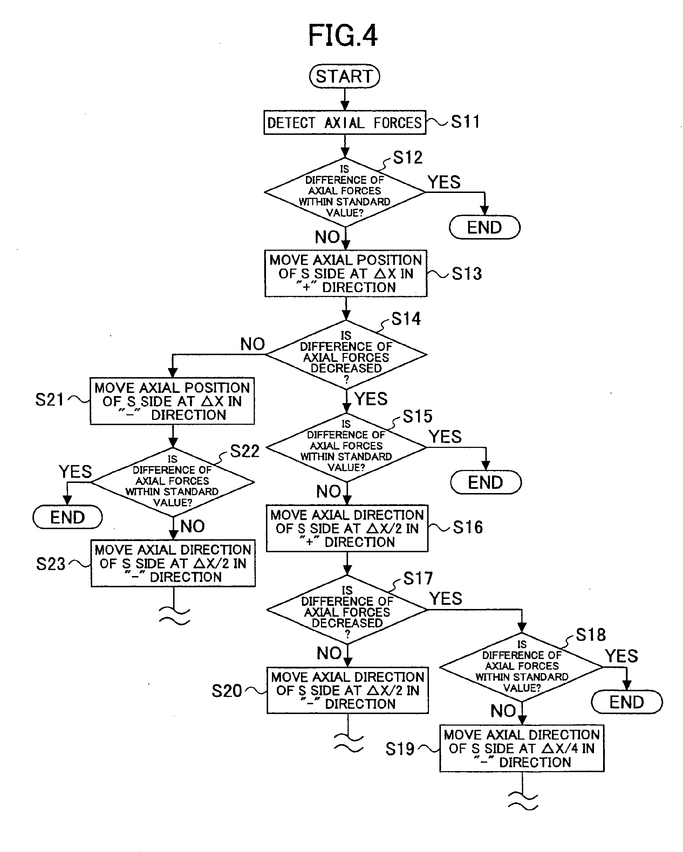

Here, a method for adjusting balance of the axial forces of the master motor side ball screw shaft 23 and the slave motor side ball screw shaft 24 by the axial force comparator 41 and the axial position operations amount computing unit 43 is discussed with reference to FIG. 3 and FIG. 4.

FIG. 3 is a flowchart showing a first example of a method for adjusting the balance of axial forces of the master motor side ball screw shaft 23 and the slave motor side ball screw shaft 24.

As shown in FIG. 3, in step S1, the load plate 30 is pushed in with a constant torque by both the master motor side ball screw shaft 23 and the slave motor side ball screw shaft 24. The axial force M of the master motor side ball screw shaft 23 is detected by the master side axial force detector 27 provided at the master side ball screw shaft 23. The axial force S of the slave motor side ball screw shaft 24 is detected by the slaver side axial force detector 28 provided at the slave side ball screw shaft 24.

In the following steps, the master motor side ball screw shaft 23 is a standard axis and the slave motor side ball screw shaft 24 is an operations object axis.

In step S2, the value of the axial force of the master motor side ball screw shaft 23 detected by the master side axial force detector 27 and the value of the axial force of the slave motor side ball screw shaft 24 detected by the slave side axial force detector 28 are compared so that whether difference of the values, namely the difference of the axial forces M and S, namely "axial force M - axial force S" or "axial force S - axial force M" is within an upper limit or a lower limit of a designated standard value is determined.

If it is determined that the difference of the axial forces is within the standard value, namely YES in step S2, the axial force of the master motor side ball screw shaft 23 and the axial force of the slave motor side ball screw shaft 24 are balanced so that the process is finished.

If it is determined that the difference of the axial forces exceeds the standard value, namely NO in step S2, the process goes to step S3.

In a case where the difference of the axial forces exceeds the upper limit of the standard value in step S3, the process goes to step S4 so that the axial position of the axial force of the slave motor side ball screw shaft 24 that is an operations object shaft is operated so as to move at an optional length in a positive (+) direction namely a direction where the difference of the axial forces is lower than the upper limit of the standard value.

In a case where the difference of the axial forces is lower than the lower limit of the standard value in step S3, the process goes to step S5 so that the axial position of the axial force of the slave motor side ball screw shaft 24 that is an operations object shaft is operated so as to move at an optional length in a negative (-) direction namely a direction where the difference of the axial forces is higher than the lower limit of the standard value.

After such operations, the process goes back to step S1 so that the axial forces of both shafts are detected and these steps are repeated until the difference of the axial forces is determined to be within the upper limit and the lower limit of the designated standard value in step S2.

Thus, the axial force M of the master motor side ball screw shaft 23 is detected by the master side axial force detector 27 provided at the master side ball screw shaft 23. The axial force S of the slave motor side ball screw shaft 24 is detected by the slaver side axial force detector 28 provided at the slave side ball screw shaft 24. The axial position of the slave motor side ball screw shaft 24 is adjusted so that the difference of the axial forces M and S, namely "axial force M - axial force S" or "axial force S - axial force M" is within the designated standard value.

A method for adjusting the balance of the axial forces of the master motor side ball screw shaft 23 and the axial force of the slave motor side ball screw shaft 24 is not limited to the method shown in FIG. 3 but may be a method shown in FIG. 4.

FIG. 4 is a flowchart showing a second example of a method for adjusting balance of axial forces of the master motor side ball screw shaft 23 and the slave motor side ball screw shaft 24.

As shown in FIG. 4, as well as the example shown in FIG. 3, in step S11, the load plate 30 is pushed in with a constant torque by both the master motor side ball screw shaft 23 and the slave motor side ball screw shaft 24. The axial force M of the master motor side ball screw shaft 23 is detected by the master side axial force detector 27 provided at the master side ball screw shaft 23. The axial force S of the slave motor side ball screw shaft 24 is detected by the slaver side axial force detector 28 provided at the slave side ball screw shaft 24.

Next, as well as the example shown in FIG. 3, in step S12, the value of the axial force of the master motor side ball screw shaft 23 detected by the master side axial force detector 27 and the value of the axial force of the slave motor side ball screw shaft 24 detected by the slave side axial force detector 28 are compared so that whether difference of the values, namely difference of the axial forces M and S, namely "axial force M - axial force S" or "axial force S - axial force M" is within an upper limit or a lower limit of a designated standard value is determined.

If it is determined that the difference of the axial forces is within the standard value, namely YES in step S12, the axial force of the master motor side ball screw shaft 23 and the axial force of the slave motor side ball screw shaft 24 are balanced so that the process is finished.

If it is determined that the difference of the axial forces exceeds the standard value; namely NO in step S12, the process goes to step S13 so that the axial position of the axial force of the slave motor side ball screw shaft 24 that is an operations object shaft is operated so as to move at length Δx in a positive (+) direction namely a direction where the difference of the axial forces is lower than the upper limit of the standard value.

Next, whether the difference of the axial forces is decreased by such moving operation is determined in step S14.

If it is determined in step S14 that the difference of the axial forces is decreased by the moving operation in step S13, namely YES in step S14, the process goes to step S15 so that whether difference of the axial forces M and S, namely "axial force M - axial force S" or "axial force S - axial force M" is within the upper limit or the lower limit of a designated standard value is determined.

If it is determined that the difference of the axial forces is within the standard value, namely YES in step S15, the axial force of the master motor side ball screw shaft 23 and the axial force of the slave motor side ball screw shaft 24 are balanced by the moving operation in step S13 so that the process is finished.

If it is determined that the difference of the axial forces exceeds the standard value, namely NO in step S15, the process goes to step S16 so that the axial position of the axial force of the slave motor side ball screw shaft 24 that is an operations object shaft is operated so as to move at length Δx/2, namely a half of the moving operation amount in step S13 in the positive (+) direction.

Next, whether the difference of the axial forces is decreased by such moving operation is determined in step S17.

In a case where it is determined in step S17 that the difference of the axial forces is decreased by the moving operation of step S16, namely YES in step S17, the process goes to step S18 so that the difference of the axial forces M and S, namely "axial force M - axial force S" or "axial force S - axial force M" is within upper limit or lower limit of a designated standard value is determined.

If it is determined that the difference of the axial forces is within the standard value, namely YES in step S18, the axial force of the master motor side ball screw shaft 23 and the axial force of the slave motor side ball screw shaft 24 are balanced so that the process is finished.

If it is determined that the difference of the axial forces exceeds the standard value, namely NO in step S18, the process goes to step S19 so that the axial position of the axial force of the slave motor side ball screw shaft 24 that is an operations object shaft is operated so as to move at length Δx/4 in a negative (-) direction.

After such operation, the process continues, until the difference of the axial forces is within the designated standard value and it is determined that he axial force of the master motor side ball screw shaft 23 and the axial force of the slave motor side ball screw shaft 24 are balanced.

In a case where it is determined in step S17 that the difference of the axial forces is not decreased by the moving operation of step S16, namely NO in step S17, the process goes to step S20 so that the axial position of the axial force of the slave motor side ball screw shaft 24 that is an operations object shaft is operated so as to move at length Δx/2 the same as the moving length in step S16 in a negative (-) direction.

After such operation, the process continues, until the difference of the axial forces is within the designated standard value and it is determined that he axial force of the master motor side ball screw shaft 23 and the axial force of the slave motor side ball screw shaft 24 are balanced.

In addition, in a case where it is determined in step S14 that the difference of the axial forces is not decreased by the moving operation of step S13, namely NO in step S14, the operation for moving the same length as that in step S13 in a negative (-) direction is performed in step S21.

Next, in step S22, it is determined whether the difference of the axial forces is within upper limit or lower limit of a designated standard value.

If it is determined that the difference of the axial forces is within the standard value, namely YES in step S22, there is no difference of the loads causing imbalance of the axial force of the master motor side ball screw shaft 23 and the axial force of the slave motor side ball screw shaft 24 so that the process is finished.

In a case where it is determined in step S22 that the difference of the axial forces exceeds the standard value, namely NO in step S22, the process goes to step S23 so that the axial position of the axial force of the slave motor side ball screw shaft 24 that is an operations object shaft is operated so as to move at length Δx/2 that is half of the moving length in step S21 in a negative (-) direction.

After such operation, the process continues, until the difference of the axial forces is within the designated standard value and it is determined that he axial force of the master motor side ball screw shaft 23 and the axial force of the slave motor side ball screw shaft 24 are balanced.

Thus, the axial force M of the master motor side ball screw shaft 23 is detected by the master side axial force detector 27 provided at the master side ball screw shaft 23. The axial force S of the slave motor side ball screw shaft 24 is detected by the slave side axial force detector 28 provided at the slave side ball screw shaft 24. The amount of adjustment is changed in a phased manner via the steps so that the axial position of the slave motor side ball screw shaft 24 is adjusted and thereby the difference of the axial forces M and S, namely "axial force M - axial force S" or "axial force S - axial force M" is within the designated standard value.

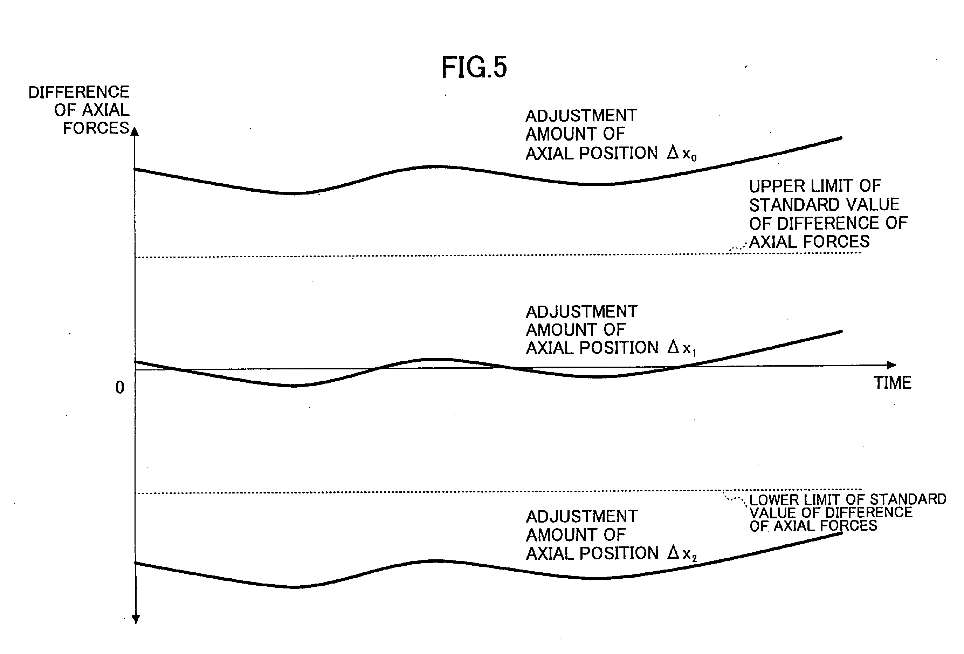

FIG. 5 is a graph showing results of the adjustment by a method of balance adjustment of the axial forces of the master motor side ball screw shaft and the slave motor side ball screw shaft shown in FIG. 3 or FIG. 4.

As shown in FIG. 5, in a case where the axial position of the slave motor side ball screw shaft 24 which is an operations object shaft is moved at Δx₀, the difference of the axial forces exceeds the upper limit of the standard value. In a case where the axial position of the slave motor side ball screw shaft 24 which is an operations object shaft is moved at Δx₂, the difference of the axial forces exceeds the lower limit of the standard value.

However, according to the adjustment by a method of balance adjustment of the axial forces of the master motor side ball screw shaft and the slave motor side ball screw shaft shown in FIG. 3 or FIG. 4, in a case where the axial position of the slave motor side ball screw shaft 24 which is an operations object shaft is moved at Δx₁ by changing the amount of adjustment in a phased manner via the steps, the difference of the axial forces is within the designated standard value so that difference of the loads causing imbalance of the axial force of the master motor side ball screw shaft 23 and the axial force of the slave motor side ball screw shaft 24 is not generated.

### [Example of injection apparatus where the basic concept of the present invention is applied]

Next, an example of an injection apparatus where the basic concept of the present invention is applied is discussed.

The injection apparatus where the basic concept of the present invention is applied is, together with a mold apparatus and a mold clamping apparatus, provided in an injection molding machine.

In the injection molding machine, resin heated and melted in a heating cylinder is injected into a cavity of the mold apparatus formed by a stationary side mold unit and a movable side mold unit under high pressure so that the cavity is filled with the molten resin. The molten resin is then cooled and solidified so as to obtain a molded article. The movable side mold unit is advanced and retracted by the mold clamping apparatus, so as to perform mold closing, mold clamping and mold opening.

After mold clamping by the mold apparatus is finished so that the injection apparatus is advanced, a nozzle of the heating cylinder passes through a nozzle passing through-hole formed in a stationary side platen so as to push to a sprue bushing provided at a rear surface of the stationary side mold.

Then, the resin made molten by the injection apparatus is pressurized by a screw in the heating cylinder and injected from the nozzle, and thereby the injected resin passes through the sprue bushing and a sprue so as to fill the cavity space formed between the stationary side mold and the moveable side mold.

Four examples are discussed from the perspective of the way of arrangement of load cells as axial force detection parts.

### [First example]

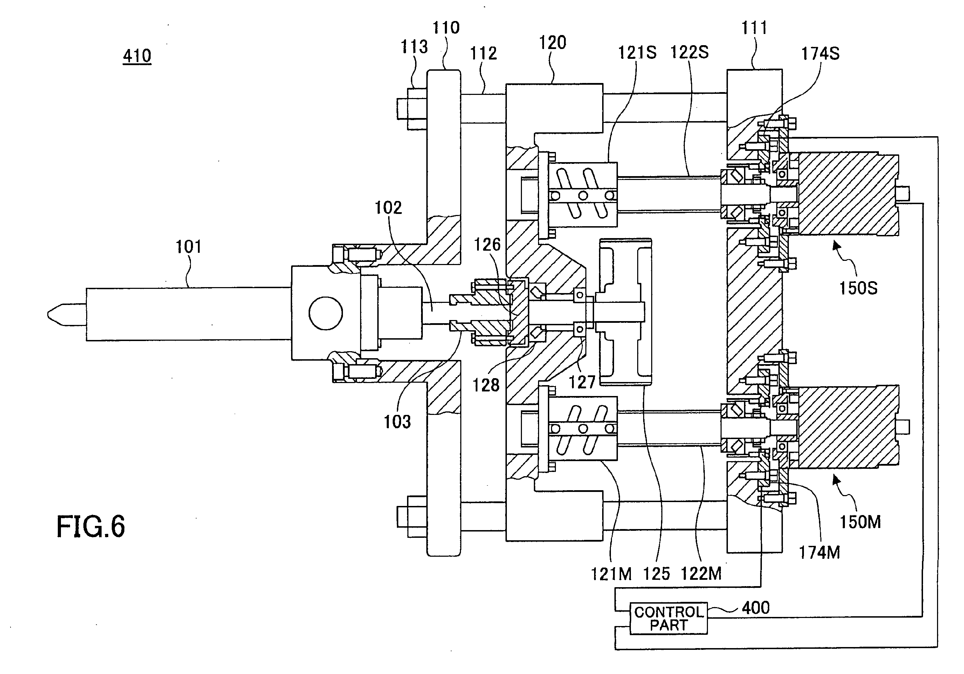

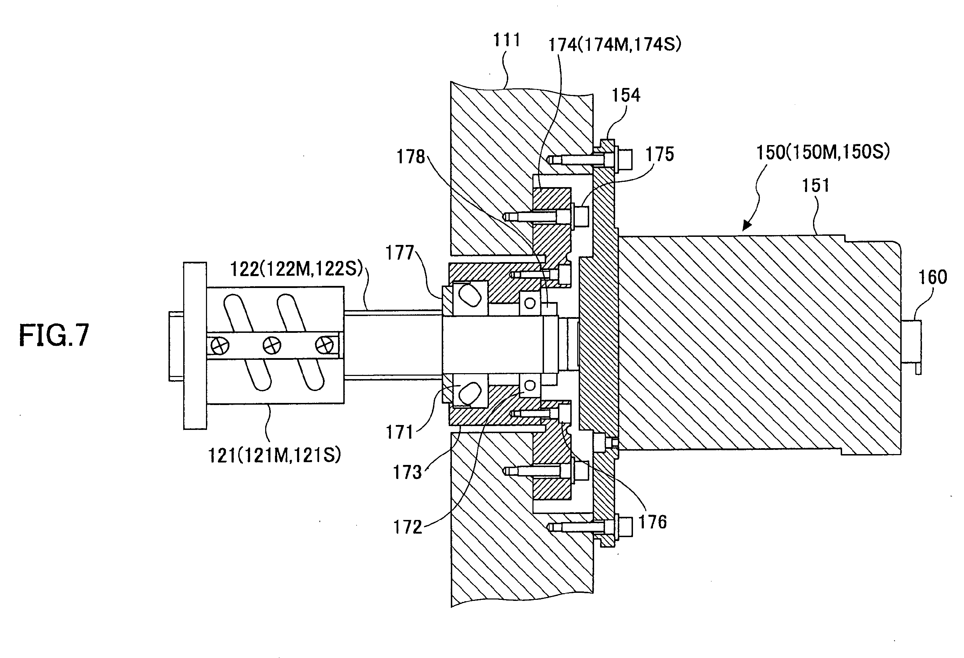

FIG. 6 is a cross-sectional view of an injection apparatus of a first example of the present invention. FIG. 7 is a cross-sectional view of an injection driving part of the injection apparatus shown in FIG. 6.

An injection apparatus 410 shown in FIG. 6 includes an injection front support 110, an injection rear support 111, guide bar 112, and guide bar nuts 113. The injection rear support 111 is a fixed support part of a master side driving part 150M and a slave side driving part 150S as injection driving parts (motors). The guide bars 112 are provided between the injection front support 110 and the injection rear support 111. The guide bar nuts 113 fix the guide bars 112 to the front support 110.

A heating cylinder 101 is provided at a front end (the left side of FIG. 6) of the injection front support 110. A screw 102 as an injection member is provided inside the heating cylinder 101 so as to be capable of advancing, retracting, and rotating.

A pressure plate 120 is slidably provided at the guide bars 112 so as to advance and retract in an axial direction with the screw 102. A master side ball screw nut 121M corresponding to a master side driving part 150M and a slave side ball screw nut 121S corresponding to a slave side driving part 150S are fixed in positions separated from an axial line of the screw 102 at the same length of the pressure plate 120.

A master side ball screw shaft 122M is engaged with the master side ball screw nut 121M. A slave side ball screw shaft 122S is engaged with the slave side ball screw nut 121S. The master side ball screw shaft 122M, the slave side ball screw shaft 122S, the master side ball screw nut 121M, and the slave side ball screw nut 121S form a movement conversion mechanism. In addition, the injection driving parts 150M and 150S are provided at the injection rear support 111 so as to transmit rotation without providing a speed reduction mechanism on the same axial lines as the master side ball screw shaft 122M and the slave side ball screw shaft 122S.

Therefore, if the ball screw shafts 122M and 122S are rotated by the injection driving parts 150M and 150S, rotational movement transferred to the ball screw shafts 122M and 122S is converted to linear movement by the ball screw shafts 122M and 122S and the ball screw nuts 121M and 121S. The ball screw shafts 122M and 122S is fixed to the pressure plate 120 slideably supported by the guide bar 112. Because of this, the rotational movement of the injection driving parts 150M and 150S is converted to the linear movement of the pressure plate 120.

In addition, the rotational shaft 126 having both ends rotatably supported by corresponding thrust bearing 128 and bearing 127 is provided on the center axial line of the pressure plate 120. A screw 102 is connected to one end of the rotational shaft 126 via a coupling 103 and a pulley 125 is fixed to another end of the rotational shaft 126. The pulley transfers rotation of a screw rotation driving motor (not shown in FIG. 6) provided on the pressure plate 120 to the rotational shaft 126.

As shown in FIG. 7, the injection driving parts 150M and 150S are formed by a motor flange 154 and a motor housing 151 fixed to the motor flange 154. A stator and a rotor (not shown in FIG. 7) are provided inside the injection driving parts 150M and 150S.

A bearing arranging part having a diameter shorter than that of a screw part is formed in the ball screw shafts 122M and 122S. Small screw parts for arranging a fixing nut 78 are formed in a rear part of the bearing arranging part of the ball screw shafts 122M and 122S. A bearing pressing member 177 is provided at a step part formed between the screw parts of the ball screw shafts 122M and 122S and the bearing arranging part. An inner ring of the thrust bearing 171 comes in contact with the bearing pressing member 177. An outer ring of the thrust bearing 171 comes in contact with a convex part end surface of a bearing holder 173 as a lubricating holding member. An outer ring of the bearing 172 also comes in contact with the convex part end surface of a bearing holder 173. The inner ring of the bearing 172 comes in contact with a fixing nut 178 provided in the ball screw shafts 122M and 122S. The thrust bearing 171 and the bearing 172 receive an advance pressure by the fixing nut 178.

The bearing pressing member 177, the thrust bearing 171, the bearing holder 173, the bearing 172 and the fixing nut 178 form a load transferring mechanism. Here, the load transferring mechanism may be a rotation permitting part so that the ball screw shafts 122M and 122S can be supported and rotated against the injection linear support 111.

A master side load cell 174M as a strain member forming a load detector configured to detect the axial force of the master side ball screw shafts 122M is provided at a part of an inside of the injection linear support 111 where the master side ball screw shaft 122M extends, by a fixing bolt 175.

A slave side load cell 174S as a strain member forming a load detector configured to detect the axial force of the slave side ball screw shaft 122S is provided at a part of an inside of the injection linear support 111 where the slave side ball screw shaft 122S extends, by a fixing bolt 175.

Each of the load cells 174M and 174S as the strain members has an annular shaped configuration having an opening part provided in the center. Each of the load cells 174M and 174S includes an external circumferential side fixing part, an internal circumferential side pressure part, and a strain part in the center. By providing the strain detector at the strain part, each of the load cells 174M and 174S functions as an axial force detector for the corresponding ball screw shafts 122M and 122S. The pressure part at the internal circumferential side of each of the load cells 174M and 174S is fixed to the bearing holder 173 by the fixing bolt 176. In addition, the fixing part at the external circumferential side of each of the load cells 174M and 174S is fixed to the injection linear support 111 by the fixing bolt 175.

Furthermore, the pressure part of the internal circumferential side of the load cell 174 is provided at the bearing holder 173 supporting the thrust bearing 171 and therefore sliding resistance between the thrust bearing 171 and the injection linear support 111 is not generated. Because of this, the axial forces of the ball screw shafts 122M and 122S can be detected with high precision by the load cells 174M and 174S.

Furthermore, since the pressure part of the internal circumferential side of the load cell 174 is provided at the bearing holder 173, each of the load cells 174M and 174S is not influenced by an advance pressure of the fixing nut 178. Therefore, the axial forces of the ball screw shafts 122M and 122S can be detected with high precision by the load cells 174M and 174S.

A spline part is formed at an end part of the injection driving part side of each of the ball screw shafts 122M and 122S. This spline part and a spline part formed on a rotational shaft (not shown in FIG. 7) provided inside each of the injection driving parts 150M and 150S form a rotation transferring part. Since the rotation transferring part includes a spline structure, a permitting part is formed so as to permit movement of each of the ball screw shafts 122M and 122S in the axial direction accompanying the strain in the axial direction of the strain member of each of the load cells 174M and 174S.

More specifically, an extending spline is formed at an end part of the injection driving part side of each of the ball screw shafts 122M and 122S and a receiving spline is formed on internal surface of a concave part formed at an end part of the injection linear support side of the rotational shaft, and thereby the ball screw shafts 122M and 122S and the rotational shafts are spline-connected. Because of this, the ball screw shafts 122M and 122S and the rotational shaft are non-rotatably connected so as to be capable of moving in the axial direction.

As long as the ball screw shafts 122M and 122S and the rotational shaft are non-rotatably connected so as to be capable of moving in the axial direction, there is no limitation of connection between the connection part of the ball screw shafts 122M and 122S and the connection part of the rotational shaft. For example, this connection can be made by a key and a key groove forming part extending in the axial direction.

An encoder 160 is provided at an end part of the rotational shaft (right side in FIG. 7). The encoder 160 detects the rotation of the rotational shaft so as to detect the position in the axial direction of the screw 102.

The ball screw shafts 122M and 122s and the hearing holder 173 can move in the axial direction relatively against the injection linear support 111 by the permitting part. Because of this, it is possible to prevent the rotor from being deformed due to movement of the ball screw shafts 122M and 122S so that the load cells 174M and 174S can detect the axial forces of the ball screw shafts 122M and 122S with high precision.

Referring back to FIG. 6, the axial force M of the master motor side ball screw shaft 122M detected by the master side load cell 174M and the axial force S of the slave motor side ball screw shaft 122S detected by the slave side load cell 174S are compared so that the difference of the axial force M and the axial force S, namely "axial force M - axial force S" or "axial force S - axial force M" is recognized.

Based on such difference, by using the method of balance adjustment of the axial forces of the master motor side ball screw shaft and the slave motor side ball screw shaft shown in FIG. 3 or FIG. 4, the amount of operating the position of the slave motor side ball screw shaft 122S is determined and corrected so that difference of the load applied to the master motor side ball screw shaft 122M and the slave motor side ball screw shaft 122S is cancelled and therefore the difference of the axial forces is canceled.

The operation of the injection apparatus 410 of this example is as follows.

In a metering step, a motor (not shown) provided at the pressure plate 120 as a screw rotation driving part is driven so that the pulley 125 is rotated and the screw 102 is rotated and thereby the resin is made molten and plasticized. The molten resin fills the head part of the heating cylinder 101. At this time, the screw 102 receiving a reaction force of the molten resin is rotated and retracted to the injection driving part side (right side in FIG. 7). The reaction force of the molten resin is a back pressure applied to the screw 102. A back pressure load is transmitted to the ball screw shafts 122M and 122S via the pressure plate 120.

The back pressure loads transmitted to the ball screw shafts 122M and 122S are transmitted to the load cells 174M and 174S via the thrust bearing 171 and the bearing holder 173 so that the strain parts of the load cells 174M and 174S are strained based on the size of the back pressure load.

Thus, the back pressure load is transmitted to the load cells 174M and 174S via the pressure plate 120, the ball screw shafts 122M and 122S, the thrust bearing 171 and the bearing holder 173. In other words, the pressure plate 120, the ball screw shafts 122M and 122S, the thrust bearing 171 and the bearing holder 173 form a load transmitting mechanism whereby the back pressure load is transmitted.

In addition, since the ball screw shafts 122M and 122S are spline-connected to the injection driving parts 150M and 150S at the rotation transmitting part 159, when the ball screw shafts 122M and 122S receive the back pressure load, the ball screw shafts 122M and 122S move smoothly to a rear side relatively against the injection rear support 111. Because of this, since the sliding part is only the rotation transmitting part 159 of the spline structure, it is possible to improve the detection precision of the load cells 174M and 174S. Therefore, it is possible to stably meter the molten resin every shot and manufacture the molded articles stably.

If the process finishes the metering step and goes to an injection step, the injection driving parts 150M and 150S are driven in a state where the rotation of the screw 102 is limited. Because of this, the ball screw shafts 122M and 122S are rotated. As a result of this, the pressure plate 120 is advanced (to a left side of Fig. 7) so that the molten resin situated in the head of the heating cylinder fills the mold units (not shown in FIG. 7). At this time as well as the metering step, even if the filling pressure is added to the screw 102 so that the back pressure is received, since the ball screw shafts 122M and 122S are spline-connected to the injection driving parts 150M and 150S at the rotation transmitting part 159, the ball screw shafts 122M and 122S can move smoothly to a rear side relatively against the injection rear support 111. Therefore, since the filling pressure can be detected with high precision by the load cells 174M and 174S, it is possible to reduce problems of molding such as molding flash or shrinkage and therefore it is possible to stably manufacture molded articles.

### [Second example]

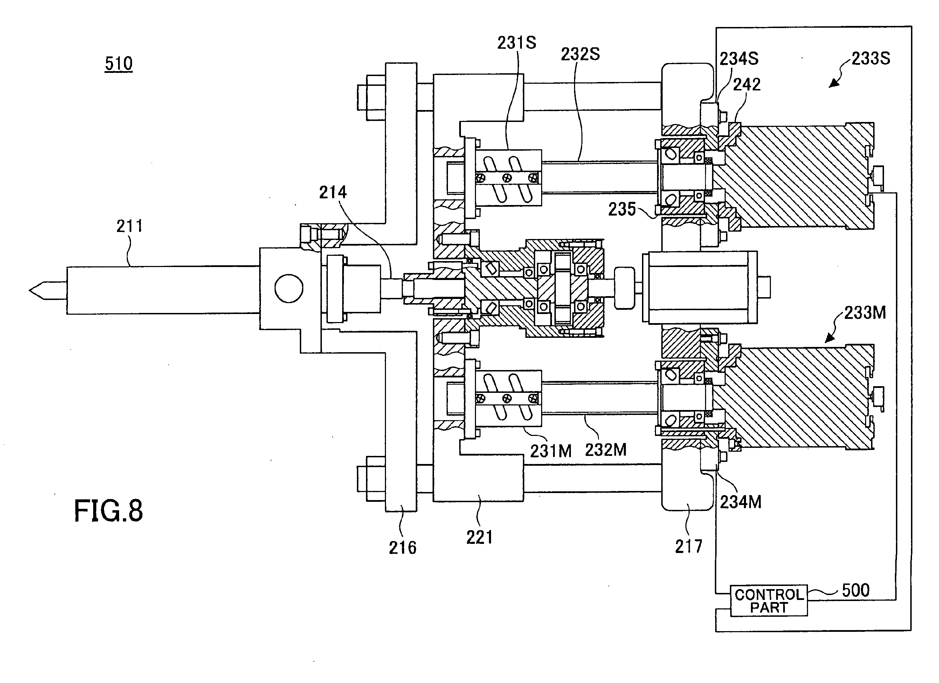

Next, an injection apparatus of a second example of the present invention is discussed. FIG. 8 is the cross-sectional view of the injection apparatus of a second example of the present invention.

In an injection apparatus 510 shown in FIG. 8, a pressure plate 221 that is a screw supporting member, as a movable plate, is provided between a front flange member 216 and a rear flange member 217. The pressure plate 221 can move in an axial direction of the screw 214 rotatably provided in the heating cylinder 221 and cannot move in other directions.

A master side driving part 233M and a slave side driving part 233S are provided at the rear flange member 217 via a master side load cell 234M and a slave side load cell 234S, respectively, as load detectors configured to measure thrust loads.

In addition, a master side ball screw nut 231M is provided in a position corresponding to the master side driving part 233M of the pressure plate 221, and a slave side ball screw nut 231S is provided in a position corresponding to the slaver side driving part 233S of the pressure plate 221. The master side ball screw shaft 232M rotated by the master side driving part 233M is engaged with the master side ball screw nut 231M. The slave side ball screw shaft 232S rotated by the slave side driving part 233M is engaged with the slave side ball screw nut 231M.

The slave side ball screw nut 231M, the master side ball screw shaft 232M, the slave side ball screw nut 231S, and the slave side ball screw shaft 232S function as a movement direction conversion mechanism configured to convert rotational movement to linear movement and are provided on the same straight line of the injection driving parts 233M and 233S, the ball screw nuts 231M and 231S and the ball screw shafts 232M and 232S.

The load cells 234M and 234S have the substantially hollow disk-shaped configurations. Fixing parts that are external circumference vicinity parts are fixed to a rear surface (a right side surface in FIG. 8) of the rear flange member 217 by fixing members such as bolts. In addition, pressure parts that are internal circumference vicinity parts of the load cells 234M and 234S are fixed to the bearing holder 235 and an edge plate 242 of the injection driving parts 233M and 233S in a state where the pressure parts are sandwiched between the bearing holder 235 and the edge plate 242.

Under this structure, the axial force M of the master motor side ball screw shaft 23 detected by the master side load cell 234M and the axial force S of the slave motor side ball screw shaft 24 detected by the slave side load cell 234S are compared by a control part 500 so that difference between the axial forces M and S, namely "axial force M - axial force S" or "axial force S - axial force M" is recognized.

Based on such difference, by using the method of balance adjustment of the axial forces of the master motor side ball screw shaft and the slave motor side ball screw shaft shown in FIG. 3 or FIG. 4, the amount of operating the position of the slave motor side ball screw shaft 122S is determined and corrected so that difference of the load applied to the master motor side ball screw shaft 122M and the slave motor side ball screw shaft 122S is cancelled and therefore the difference of the axial forces is canceled.

### [Third example]

Next, an injection apparatus of a third example of the present invention is discussed.

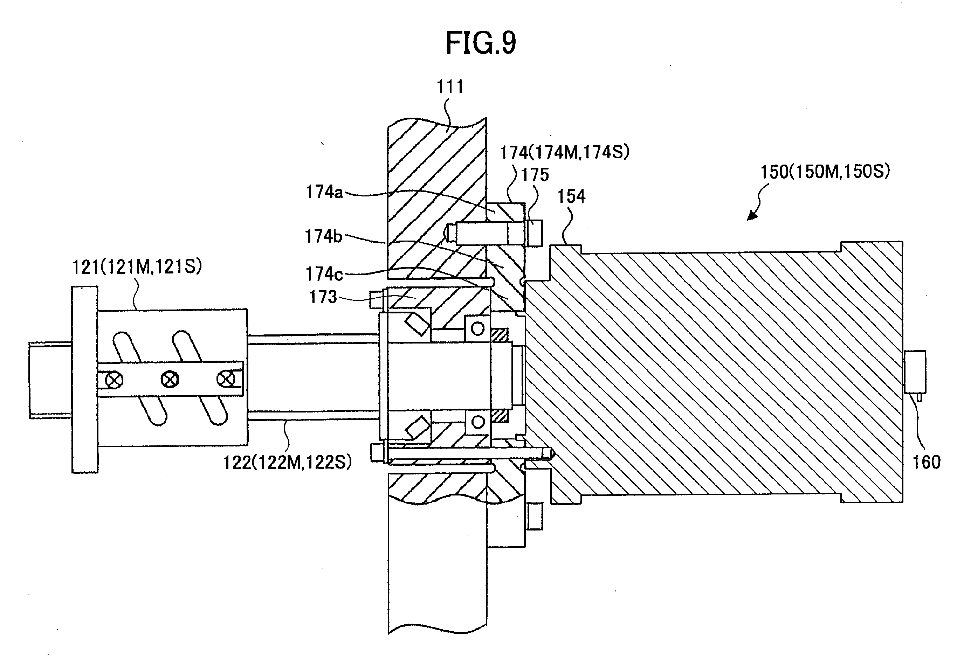

FIG. 9 is a cross-sectional view of an injection driving part of an injection apparatus of the third example of the present invention. The injection apparatus of the third example of the present invention is a modified example of the injection apparatus of the first example of the present invention discussed with reference to FIG. 6 and Fig. 7. Therefore, in FIG. 9, parts that are the same as the parts shown in FIG. 7 are given the same reference numerals, and explanation thereof is omitted.

In the injection apparatus shown in FIG. 9, a bearing holder 173 and injection driving parts 150M and 150S are provided at a rear flange member 111 via load cells 174M and 174S as load detectors or strain members.

The load cells 174M and 174S have the substantially hollow disk-shaped configurations. Fixing parts 174a that are external circumference vicinity parts are fixed to a rear surface (a right side surface in FIG. 9) of a rear flange member 111 by fixing members such as bolts 175. In addition, pressure parts 174c that are internal circumference vicinity parts of the load cells 174M and 174S are fixed to a bearing holder 173 and an edge plate 154 in a state where the pressure parts 174c are sandwiched between the bearing holder 173 and the edge plate 154. Because of this, the injection driving parts 150M and 150S are provided at the rear flange member 111 via the load cells 174M and 174S so as to be capable of moving the rear flange member 111 in the axial direction.

In addition, projections (not shown) having the substantially cylindrical shaped configuration and projecting frontward are formed in the internal circumferential edge of the front surface of the edge plate 154 so as to be inserted in holes of the load cells 174M and 174S. By inserting the projections in the holes of the load cells 174M and 174S, the edge plate 154 and the load cells 174M and 174S are positioned so that axial centers thereof are consistent with each other. Since the load cells 174M and 174S are provided at the rear flange member 111, the axial center of the edge plate 154 is positioned so as to be consistent with the axial center of the rear flange member 111. A boundary part between the fixing part 174a and the pressure part 174c of the load cells 174M and 174S is a boundary part 174b where a strain measuring device (not shown) such as a strain gage is provided. The boundary part 174b has a relatively small thickness. If the thrust loads of the ball screw shafts 122M and 122S are transferred to the pressure part 174c via the hearing holder 173, the strain is generated. By measuring the strain generated at the boundary part 174b by the strain measuring device, the size of the thrust load can be measured.

Under this structure, the axial force M of the master motor side ball screw shaft 23 detected by the master side load cell 234M and the axial force S of the slave motor side ball screw shaft 24 detected by the slave side load cell 234S are compared by a control part (not shown) so that the difference between the axial forces M and S, namely "axial force M - axial force S" or "axial force S - axial force M" is recognized.

Based on such difference, by using the method of balance adjustment of the axial forces of the master motor side ball screw shaft and the slave motor side ball screw shaft shown in FIG. 3 or FIG. 4, the amount of operating the position of the slave motor side ball screw shaft 122S is determined and corrected so that difference of the load applied to the master motor side ball screw shaft 122M and the slave motor side ball screw shaft 122S is cancelled and therefore the difference of the axial forces is canceled.

### [Fourth example]

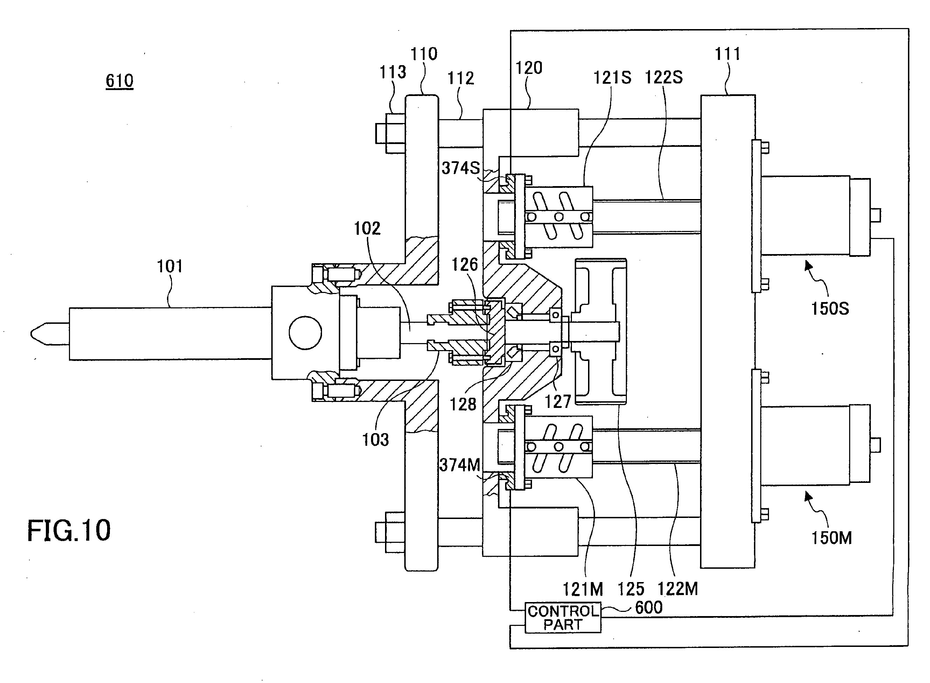

Next, an injection apparatus of a fourth example of the present invention is discussed. FIG. 10 is a cross-sectional view of an injection apparatus of the fourth example of the present invention. In FIG. 10, parts that are the same as the parts shown in FIG. 6 are given the same reference numerals, and explanation thereof is omitted.

In the injection apparatus shown in FIG. 6 of the first example of the present invention, inside the injection rear support 111, the load cell 174M is provided at a part where the master side ball screw shaft 122M is located, and the load cell 174S is provided at a part where the slave side ball screw shaft 122S is located.

On the other hand, in an injection apparatus 610 shown in FIG. 10, the load cell 374M is provided between a pressure plate 120 and a master side ball screw nut 121M. The pressure plate 120 is slidably supported by guide bars 112 and advances and retracts in the axial direction with a screw 102. The master side ball screw nut 121M is a shaft engaging part engaging with the master side ball screw shaft 122M. The load cell 174M is a strain member forming a load detector configured to detect the axial force of the master side ball screw shaft 122M.

Similarly, a load cell 174S is provided between the pressure plate 120 and a slave side ball screw nut 121S as a shaft engaging part engaging with a slave side ball screw shaft 122S. The load cell 174S is a strain member forming a load detector configured to detect the axial force of the slave side ball screw shaft 122S.

Under this structure, the axial force M of the master motor side ball screw shaft 23 detected by the master side load cell 234M and the axial force S of the slave motor side ball screw shaft 24 detected by the slave side load cell 234S are compared by a control part 600 so that the difference between the axial forces M and S, namely "axial force M - axial force S" or "axial force S - axial force M" is recognized.

Based on such difference, by using the method of balance adjustment of the axial forces of the master motor side ball screw shaft and the slave motor side ball screw shaft shown in FIG. 3 or FIG. 4, the amount of operating the position of the slave motor side ball screw shaft 122S is determined and corrected so that the difference of the load applied to the master motor side ball screw shaft 122M and the slave motor side ball screw shaft 122S is cancelled and therefore the difference of the axial forces is canceled.

Thus, in the examples of the present invention, the master side load cell and the slave side load cell are provided at the master side ball screw shaft and the slave side ball screw shaft or between the pressure plate and the master side ball screw nut and the slave side ball screw nut so as to detect the axial forces of the master side ball screw shaft and the slave side ball screw shaft.

Based on such difference, by using the method of balance adjustment of the axial forces of the master motor side ball screw shaft and the slave motor side ball screw shaft shown in FIG. 3 or FIG. 4, the amount of operating the position of the slave motor side ball screw shaft is determined and corrected so that difference of the load applied to the master motor side ball screw shaft and the slave motor side ball screw shaft is cancelled and therefore the difference of the axial forces is canceled.

Even if unbalanced loads are generated at each of the ball screw shafts due to a component clearance (tolerance) of the injection apparatus or an assembly error in assembling the injection apparatus, the unbalanced loads are detected and adjusted in a simple structure so that the load balance between the both ball screw shafts can be made.

Therefore, it is possible to avoid a situation where an eccentric load is concentrated on the ball screw nut based on the difference of the loads applied to the ball screw shafts and therefore a stress is locally generated. As a result of this, reduction to the service life of the ball screw nut or the ball screw shaft can be prevented.

In the example shown in FIG. 1, the load cell is provided between plural driven parts of the injection screw where driving forces from the injection driving parts (motors) are added or in the vicinity of each of the driven parts. On the other hand, in the examples of the present invention, since the axial forces are detected for every shaft, it is possible to recognize the difference of the axial forces with high precision so that the balance of the axial forces of both shafts can be made. Particularly, in the examples shown in FIG. 6 through FIG. 9, the load cells are provided between the driving parts and the fixing parts such as the injection rear support or rear flange member. Therefore, it is possible to reduce the rotational moment based on the detection of the axial forces.

The present invention is not limited to the specifically disclosed embodiments, and various variations and modifications may be made without departing from the scope of the present invention.

For example, the way of arrangement of the load cells to detect the axial forces of the ball screw shafts is not limited to the example shown in FIG. 6 through Fig. 10. The present invention can be applied to other ways of the arrangement of the load cells as long as the axial force of each of the shafts can be detected.

In addition, in the above-discussed examples, the axial force detected by the detector is computed in the control part such as the control part 40 so that the axial position is corrected. However, the present invention is not limited to this example. It is not necessary to always execute such computing in the control part.

For example, the detection values of the master side axial force detector 27 and the slave side axial force detector 28 or the difference of the detection values may be displayed in a display part (not shown). In this case, while an operator checks displayed detection values of the master side axial force detector 27 and the slave side axial force detector 28 or the difference of the detection values, the operator holds a stopping position of one motor such as the master motor 21 and drives another motor such as the slave motor 22 so that the detection values are compared and adjustment is made. In this case, the operator inputs the amount of adjustment of the above-mentioned other motor to a setting part (not shown) until the difference of the detection values is equal to or less that a value designated in advance.

In addition, in the display part, the amount of adjustment of the above-mentioned other motor computed in the control part based on the difference of the detection values may be displayed in the display part. In this case, the operator may input the amount of adjustment of the above-mentioned another motor to the setting part based on the displayed amount of adjustment of the motor.

Furthermore, in the above-discussed embodiment of the present invention, the example where two sets of the combination of the motor and the ball screw is explained. However, the present invention is not limited to this example. The present invention can be applied to an example with three or more sets of the combination of the motor and the ball screw.

### INDUSTRIAL APPLICABILITY

The present invention is applicable to an injection apparatus having a mechanism wherein an object is advanced and retracted by plural shafts and a method for adjusting difference of axial forces of plural shafts provided in the injection apparatus.

## Claims

1. An injection apparatus having a mechanism
wherein an object is advanced and retracted by a plurality of shafts, the injection apparatus comprising:
a plurality of axial force detection parts configured to detect an axial force of each of the shafts; and
a control part configured to compare detection values detected by the axial force detection parts, the control part being configured to calculate an amount of operation of a position of a shaft to be operated in the plurality of the shafts based on a difference of the axial forces of the shafts indicated by the detection values so as to correct the position, the control part being configured to cancel the difference of the axial forces.

2. The injection apparatus as claimed in claim 1,
wherein the control part determines whether the difference of the axial forces is within a standard value; and
the control part operates the position of the shaft to be operated in a case where the difference of the axial forces exceeds the standard value.

3. The injection apparatus as claimed in claim 2,
wherein the control part implements a first operation whereby a position of the shaft to be operated is moved at a first length in a first direction in a case where the difference of the axial forces exceeds the designated standard value;
the control part determines whether the difference of the axial forces is within the designated standard value in a case where the difference of the axial forces is decreased by the first operation; and
the control part implements a second operation whereby the position of the shaft to be operated is moved at second length shorter than the first length in the first direction in a case where the difference of the axial forces exceed the designated standard value.

4. The injection apparatus as claimed in claim 2,
wherein the control part implements a first operation whereby a position of the shaft to be operated is moved at a first length in a first direction in a case where the difference of the axial forces exceeds the designated standard value;
the control part implements a second operation whereby a position of the shaft to be operated is moved at the first length in a second direction different from the first direction in a case where the difference of the axial forces is not decreased by the first operation;
the control part determines whether the difference of the axial forces is within the designated standard value; and
the control part implements a third operation whereby the position of the shaft to be operated is moved at a second length shorter than the first length in the second direction in a case where the difference of the axial forces exceeds the designated standard value.

5. The injection apparatus as claimed in any one of claim 1 through claim 4,
wherein the axial force detection part is provided at a part where the shaft is provided of an inside part of a fixing part of an injection driving part configured to rotate the shaft.

6. The injection apparatus as claimed in any one of claim 1 through claim 4,
wherein the axial force detection part is sandwiched between an injection driving part configured to rotate the shaft and a fixing part of the injection driving part.

7. The injection apparatus as claimed in 6,
wherein the axial force detection part is fixed to the fixing part of the injection driving part via a fixing member.

8. The injection apparatus as claimed in any one of claim 1 through claim 4,
wherein the axial force detection part is provided between a shaft engaging part configured to engage with the shaft rotated by the injection driving part and the object, and
the shaft engaging part converts rotational movement transferred to the shaft to linear movement whereby the object is advanced and retracted with the shaft.

9. An adjusting method of an injection apparatus, comprising the steps of:
detecting an axial force of each of a plurality of shafts provided in the injection apparatus; and
adjusting a difference of the axial forces by correcting a position of the shaft to be operated, in a case where the difference of the detected axial forces exceeds a designated standard value.
